Europäisches Patentamt

European Patent Office

Office européen des brevets

(19)

(11) Veröffentlichungsnummer: **0 297 129**
**B1**

(12) **EUROPÄISCHE PATENTSCHRIFT**

(45) Veröffentlichungstag der Patentschrift :
02.11.89

(21) Anmeldenummer : 88901035.1

(22) Anmeldetag : 12.01.88

(86) Internationale Anmeldenummer :
PCT/EP 88/00019

(87) Internationale Veröffentlichungsnummer :
WO/8805164 (14.07.88 Gazette 88/15)

(51) Int. Cl.⁴ : **G 01 M 11/00**, G 01 N 21/41

(54) MESSANORDNUNG UND MESSVERFAHREN ZUR BRECHZAHLPROFILMESSUNG.

(30) Priorität : 12.01.87 DE 3700637

(43) Veröffentlichungstag der Anmeldung :
04.01.89 Patentblatt 89/01

(45) Bekanntmachung des Hinweises auf die Patenterteilung : 02.11.89 Patentblatt 89/44

(84) Benannte Vertragsstaaten :
AT BE CH DE FR GB IT LI LU NL SE

(56) Entgegenhaltungen :
EP--A-- 0 111 441
WO--A--84 /012 21

(73) Patentinhaber : BANDEMER, Adalbert
Skabiosenstrasse 9
D-8000 München 50 (DE)

(72) Erfinder : BANDEMER, Adalbert
Skabiosenstrasse 9
D-8000 München 50 (DE)

(74) Vertreter : Heim, Hans-Karl (DE) et al
Hofbrunnstrasse 36
D-8000 München 71 (DE)

## Beschreibung

Die Erfindung betrifft eine Meßanordnung gemäß Oberbegriff des Anspruches 1 und ein Meßverfahren gemäß Oberbegriff des Anspruches 10.

Der räumliche Brechzahlverlauf spielt für die Lichtführungseigenschaften eines dielektrischen Wellenleiters eine entscheidende Rolle. Mit Kenntnis des genauen Profilverlaufs können wesentliche Größen der Signalübertragung wie Bandbreite, Dispersion und Einwelligkeitsbereich der Faser berechnet werden. Zur Bestimmung des ortsabhängigen Brechzahlverlaufs von Glasfasern besteht die Möglichkeit, an der Faser selbst oder an deren stabförmiger Vorform Messungen durchzuführen. Aus der Literatur sind verschiedene Meßverfahren für Messungen an der Vorform sowie an der Faser selbst bekannt (R. Kersten : Einführung in die Optische Nachrichtentechnik, Springer 1983, Seite 172-182, D. Marcuse : Index Profile Measurements of Fibres and Their Evaluation, IEEE Proc., vol. 68, no. 6, p. 666-688).

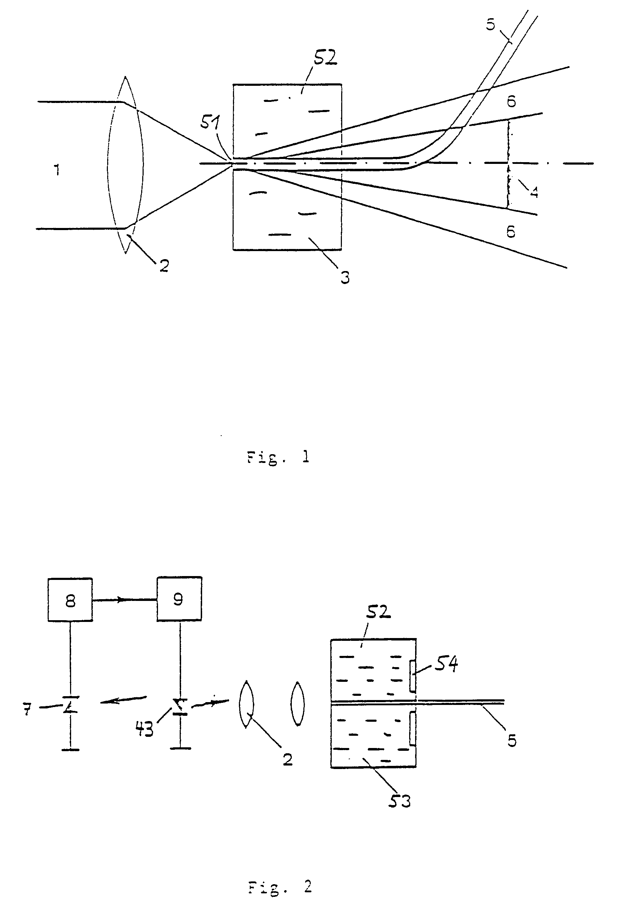

Als genaueste Methode, den Einfluß der Leckwellen zu eliminieren und gleichzeitig die geometrischen Daten wie Kerndurchmesser, Manteldurchmesser, Elliptizität und Exzentrizität des Kerns festzustellen, gilt die RNF-Methode (refracted near-field), (W. J. Stewart : Optical Fiber and Preform Profiling Technology, IEEE-QE, vol. 18, no. 10, p. 1451-1466, K. I. White, Optical and Quantum Electronics 11 (1979), p. 185-196). Fig. 1 zeigt das Prinzip der Meßanordnung zur RNF-Methode. Ein Lichtstrahl 1 einer schmalbandigen Lichtquelle wird mit einem Linsensystem 2 auf die in einer flüssigkeitsgefüllten Meßzelle 3 befindliche Endfläche einer Glasfaser 5 fokussiert. Die numerische Apertur des Linsensystems muß dabei größer als die numerische Apertur der Glasfaser sein. Der Lichtstrahl wird teilweise innerhalb des Wellenleiters geführt, ein anderer Teil verläßt die Faser durch den Mantel und tritt in die Flüssigkeit der Zelle aus. Der zentrale Anteil des Lichts enthält störende Leckwellen und wird durch eine Abdeckscheibe 4 ausgeblendet. Die Intensität des Lichtanteils im äußeren Strahlkegel 6 entspricht dem Brechungsindex am Ort des fokussierten Lichtflecks und wird dem Detektor zugeführt. Verschiebt man nun den Lichtfleck auf der Faserendfläche, kann der Brechzahlverlauf in Faserkern und -mantel gemessen werden.

Nach diesem Prinzip arbeiten einige am Markt erhältliche Meßgeräte (Fa. York S 14, Fa. Sira LTD Refractive Index Profiler, Fa. Alphatronix Modell NR 8200). Dabei wird jeweils ein HeNe-Laser als Lichtquelle eingesetzt. Derartige Realisierungen erreichen einen Brennfleckdurchmesser von unter 1 μm als Ortsauflösungsgrenze. Durch den Einsatz von Schrittmotoren wird der Brennfleck auf der Faserendfläche nur stufenweise verschoben. Zur groben Vorjustierung der Faser wird diese vom anderen Ende her mit Weißlicht bestrahlt und eine Beobachtungsoptik vor der Meßzelle aufgebaut.

Die vorhandenen Geräte haben durch die Verwendung eines Gaslasers sehr große Bauformen und stellen durch die zahlreichen optischen Komponenten für die Strahlführung sowie für die Vorjustierung der Faser hohe Steifigkeitsanforderungen an den Aufbau und haben daher ein großes Gewicht (Beispiel : Produkt der Fa. Alphatronixs : Maße : 550 × 405 × 702 mm³, Gewicht : 60 kg). Da der Meßeffekt für die Brechzahlprofilmessung im Promillebereich liegt, muß die Ausgangsleistung des HeNe-Lasers auf Fluktuationen von kleiner als 0,1‰ stabilisiert werden. Dies erfordert einen hohen Regelungsaufwand bzw. eine Division des Meßsignals durch ein geeignetes Referenzsignal.

Die erreichbare Ortsauflösung ist durch die Beugung des Lichts physikalisch auf zirka einen Mikrometer Brennfleckdurchmesser begrenzt. Übliche Monomodefasern haben im Vergleich dazu einen Kerndurchmesser von 5 bis 10 μm. Der Kernbereich von Gradientenfasern von zirka 50 μm wird bei der Herstellung durch 50 bis 100 verschieden dotierter Glasschichten aufgewachsen. Feinstrukturen und Herstellungsfehler bei dem Wechsel zwischen zwei unterschiedlichen Dotierungsschichten, wie sie durch Messungen an der Vorform festgestellt werden können, sind bei einer Ortsauflösung von einem Mikrometer (nur bei optimaler Justierung erreichbar !) nicht erkennbar. Eine Messung an der Faser selbst und nicht an der Vorform ist aber erstrebenswert, da hierbei Veränderungen beim Faserziehen mitberücksichtigt werden können.

Der Erfindung liegt die Aufgabe zugrunde, eine Meßanordnung der gattungsgemäßen Art in kompakter Weise so zu realisieren, daß damit das Brechzahlprofil an einem optischen Wellenleiter mit der RNF-Methode weitgehend automatisch und ohne manuelle Vorjustage gemessen werden kann, wobei verfahrensgemäß durch eine geeignete Verarbeitung der Meßwerte ein hochauflösendes Brechzahlprofil des optischen Wellenleiters erreicht werden soll.

Diese Aufgabe wird erfindungsgemäß bei einer Vorrichtung mittels der Merkmale des kennzeichnenden Teils des Anspruches 1 und bei einem Meßverfahren mittels des Merkmals des kennzeichnenden Teils des Anspruches 10 gelöst.

Als wesentlicher Gedanke der Erfindung kann dabei angesehen werden, die Meßanordnung so auszulegen, daß eine strenge axiale Führung bzw. eine Selbstjustierung des zu vermessenden Wellenleiters, der insbesondere eine Glasfaser sein kann, zu erreichen. Darüber hinaus wird ergänzend eine ruckfreie kontinuierliche Führung des Abtastlichtstrahles auf der zu vermessenden Endfläche durch den Einsatz von Piezotranslatoren und/oder Gleichstrommotoren erreicht. Diese Verschiebeeinrichtungen können dabei sowohl auf das Beleuchtungssystem, das die Laserlichtquelle und das Linsensystem umfaßt, als auch auf die Meßzelle selbst einwirken. Zur Vermeidung einer sonst üblichen manuellen Vorzentrierung der Meßzelle besteht die Möglichkeit durch Differenzbildung der entsprechenden Meßsignale, z. B. bei diametral gegenüberliegenden Fotodioden des Detektors, eine automatische Vorzentrierung der Meßzelle zu erreichen. Als Meßsignal wird bei der erfindungsgemäßen Meßanordnung bzw. bei deren Verfahren die Summe der empfangenen Meßsignale, insbesondere der Fotodiodenströme, verwendet.

Verfahrensmäßig macht sich die Erfindung die Überlegung zunutze, daß die dem lokalen Brechungsindex proportionale detektierte Lichtleistung bei systemtheoretischer Betrachtung, der Faltung des zu messenden Intensitätsverlaufes mit dem durch physikalische Gesetze begrenzten, endlich ausgedehnten abtastenden Brennflecks entspricht. Aus diesem Grund wird in der Auswerteeinheit oder -einrichtung eine Entfaltung durchgeführt, die eine Steigerung der Ortsauflösung des Brechzahlprofiles ergibt.

Zur Erreichung einer weiteren Vereinfachung der Meßzelle kann in der Meßzelle ein mit einer Öffnung versehener Hohlspiegel bzw. ein Hohlspiegelsegment angeordnet werden. Über diesen Hohlspiegel können die zu erfassenden an der Endfläche des Wellenleiters abgelenkte Lichtstrahlen auf den Detektor konzentriert bzw. sogar fokussiert werden. Der Detektor kann auf diese Weise als Einzelelement, z. B. als Fotodiode, ausgelegt werden.

Neben der besonderen Eignung der Erfindung zur Erfassung des Brechzahlprofils bei Glasfasern eignet sich die Meßanordnung auch für planare optische Wellenleiter, so daß hiermit eine einfache aber weitgehend universell einsetzbare Meßanordnung erreicht wird.

Die wesentlichen Vorteile der Erfindung können daher darin gesehen werden, daß durch die Verwendung eines Halbleiterlasers eine kompaktere Meßanordnung erzielt wird, deren Meßgenauigkeit durch die ruckfreie kontinuierliche Verschiebung erheblich gesteigert wird. Hierzu trägt auch die automatische axiale Zentrierung des entsprechenden Wellenleiters, insbesondere der Glasfaser, mittels Glasfaserstecker bei. Meßtechnisch wird durch den Einsatz der Entfaltung eine Steigerung der Meßgenauigkeit erreicht. Der Einsatz eines in der Meßzelle vorgesehenen Hohlspiegels führt zu einer vereinfachten, kostengünstigeren Detektoranordnung. Die entsprechende Meßanordnung und das Meßverfahren sind auch für planare optische Wellenleiter einsetzbar, so daß auch hierfür eine erhebliche Meßbereichsverbesserung erreichbar ist.

Vorteilhafte Weiterbildungen der Erfindung sind in den Unteransprüchen und der nachfolgenden Beschreibung enthalten. Es zeigen:

Fig. 1 eine Meßanordnung gemäß dem Stand der Technik;

Fig. 2 in schematischer Darstellung eine erfindungsgemäße Meßanordnung;

Fig. 3 und 4 die schematische Anordnung einer elektrischen Ablenkeinrichtung, insbesondere mit Braggzellen;

Fig. 5 ein schematisches Blockdiagramm über die Anordnung des Detektors und die Auswertung zur Vorzentrierung;

Fig. 6 einen Selbstzentrierungsstecker, insbesondere für Glasfasern;

Fig. 7 einen schematischen Verlauf des im Detektor ermittelten Meßsignals;

Fig. 8 die Quantisierung des räumlich verteilten, abtastenden Lichtflecks zur « Entfaltung » des Meßsignals;

Fig. 9 eine Meßanordnung zur Ermittlung der Länge und des Dämpfungsbelages des Wellenleiters;

Fig. 10 eine Meßanordnung mit Hohlspiegel bzw. Hohlspiegelsegment;

Fig. 11 zwei Ausführungsbeispiele eines planaren, optischen Wellenleiters und

Fig. 12 eine Meßanordnung für einen planaren Wellenleiter.

In Fig. 2 weist die in schematischer Weise dargestellte Meßanordnung eine Laserdiode 43 als Halbleiterlaser auf. Der elliptische Strahlkegel dieser Halbleiterlaserdiode wird durch eine Linsenanordnung 2, die insbesondere als Kugellinsenanordnung ausgelegt ist, kollimiert und stark fokussiert. Durch eine rauscharme Detektion des Laserlichts mit einer Referenzphotodiode 7 kann eine Pegelregelung 8 den Laservorstrom 9 regeln und zusammen mit einer Temperaturregelung die Ausgangsleistung stabilisieren (Fig. 2).

In einer vorteilhaften Weiterentwicklung der erfindungsgemäßen Anordnung wird das Laserlicht durch eine Mikrolinsenanordnung fokussiert, die speziell für die im infraroten Bereich liegende Laserwellenlänge eine Korrektur der sphärischen Aberration vornehmen. Das Abtasten der Faserendfläche mit dem Lichtpunkt erfolgt durch eine Verschiebung des aus Laserdiode und Linsensystem bestehenden Beleuchtungssystems mit Piezotranslatoren bzw. Piezotranslatoren mit durch Hebelwirkung vergrößerter Verstellung. Damit kann eine Verschiebung in Quasi-Echtzeit erfolgen und die Justierung des optischen Aufbaus des Meßgeräts rasch vonstatten gehen.

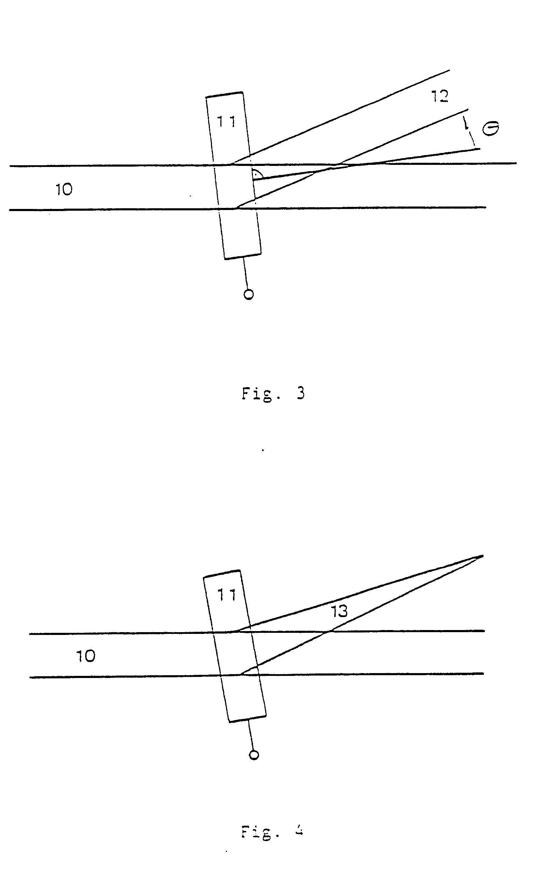

In einer optimalen Weiterbildung der erfindungsgemäßen Anordnung wird das Beleuchtungssystem durch gleichstrommotorisierte Mikrometerschrauben mit Strichcodescheibe ruckfrei und kontinuierlich gegenüber der Meßzelle verschoben und eine Bestimmung der Ortskoordinate mit einer Genauigkeit von 0,1 μm ermöglicht. Eine Verschiebung des Brennflecks in der Faserendflächenebene kann in einer Weiterbildung der Meßanordnung auch elektrisch mit Braggzellen erfolgen (Fig. 3 und 4). In einer Braggzelle werden durch Hochfrequenzsignale Ultraschallwellen angeregt. Durch die akustooptische Wechselwirkung kann damit ein Lichtstrahl 10, welcher durch die Braggzelle 11 geht und gegen die Phasenfronten der Ultraschallwelle um den Braggwinkel geneigt ist, um einen Winkel θ (12) abgelenkt werden, der bei konstanter Emissionswellenlänge proportional von der Frequenz des Hochfrequenzsignals abhängt (Fig. 3).

$$\Theta = \arcsin \frac{\lambda_0 \, f_{HF}}{2vn}$$

$\lambda_0$ : Freiraumwellenlänge

$f_{HF}$ : Frequenz des Hochfrequenzsignals

$v$ : Ausbreitungsgeschwindigkeit der Ultraschallwelle

$n$ : Brechungsindex des Mediums.

Wird der Frequenzinhalt innerhalb der Apertur der Braggzelle geeignet gewobbelt, tritt zusätzlich eine Linsenwirkung 13 ein (Fig. 4) und der Lichtstrahl wird fokussiert. Mit Braggzellen kann somit der Lichtstrahl gebündelt und gleichzeitig in Echtzeit auf der Faserendfläche verschoben werden, so daß keine bewegten Teile mehr notwendig sind. Die Ortsinformation wird aus der angelegten Frequenz des HF-Signals gewonnen.

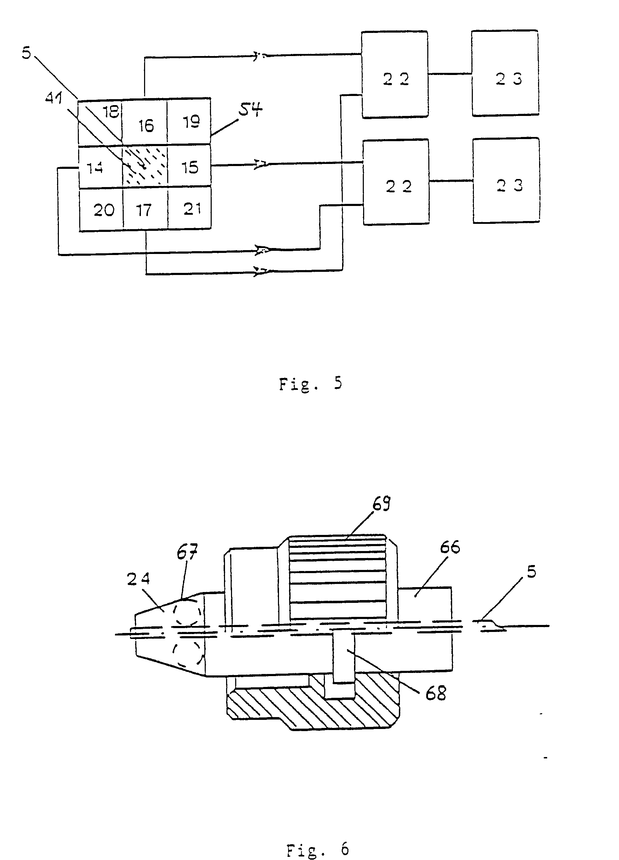

Die Detektion des aus der Faser herausgestreuten Lichts wird durch eine als Detektorarray 54 angeordnete Zahl (z. Bsp. 14 bis 21) von Photodioden mit geringem Dunkelstrom und geringer rauschäquivalenter Leistung innerhalb der Meßzelle 53 realisiert. Durch den Einbau der Empfangseinheit in die Meßzelle 53 wird Fremdlichteinfluß auf den Detektor vermieden und aufwendige Empfangsverfahren wie die Lock-in-Detektion können entfallen. Die Glasfaser 5 wird dabei durch eine Öffnung in der Mitte des Diodenfeldes in die ölgefüllte Meßzelle 53 eingeführt, die gleichzeitig als Abdeckscheibe wirkt (Fig. 5). Durch geeignete Differenzbildung 22 der Diodenströme gegenüberliegender Photodioden (14, 15 bzw. 16, 17) kann die zu dieser Koordinate gehörende Verschiebeeinheit 23 gesteuert und so die Meßzelle 53 automatisch grob vorjustiert werden. Ein Beleuchten der anderen Faserendfläche mit Weißlicht und die Beobachtungsoptik im Strahlengang des Laserlichts kann damit entfallen. Die Summierung aller Photodiodenströme liefert die dem lokalen Brechzahlprofil proportionale Lichtleistung.

Die exakte achsenparallele Lage der Glasfaser zur Strahlenachse kann zusammen mit einer Vorzentrierung und einfachen Fixierung der Faser durch die Verwendung kommerziell erhältlicher Glasfaser-Steckerverbindungen 24, Fig. 6, erzielt werden.

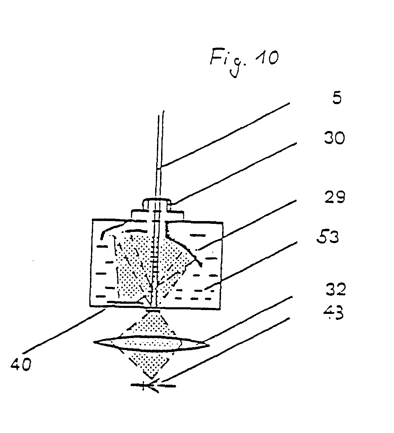

Die Glasfaser-Steckverbindung 24 besteht aus einem Innenteil 66, das vorne einen Zentrierungskonus 67 aufweist. Über einen ringförmig am Innenteil 66 vorgesehenen Flansch 68 ist eine kraftschlüssige Festlegung mit einer Außenbuchse möglich. Die Außenbuchse 69 weist z. B. ein Innengewinde auf, mit dem sie gegen die Buchse 30 (Fig. 10) festgelegt wird. Im Konusbereich 67 ist eine Innenzentrierung der Glasfaser 5 vorhanden. Durch diesen Glasfaser-Stecker 24 kann eine einfache axiale Selbstzentrierung und Justierung speziell einer Glasfaser, in der Meßzelle erreicht werden.

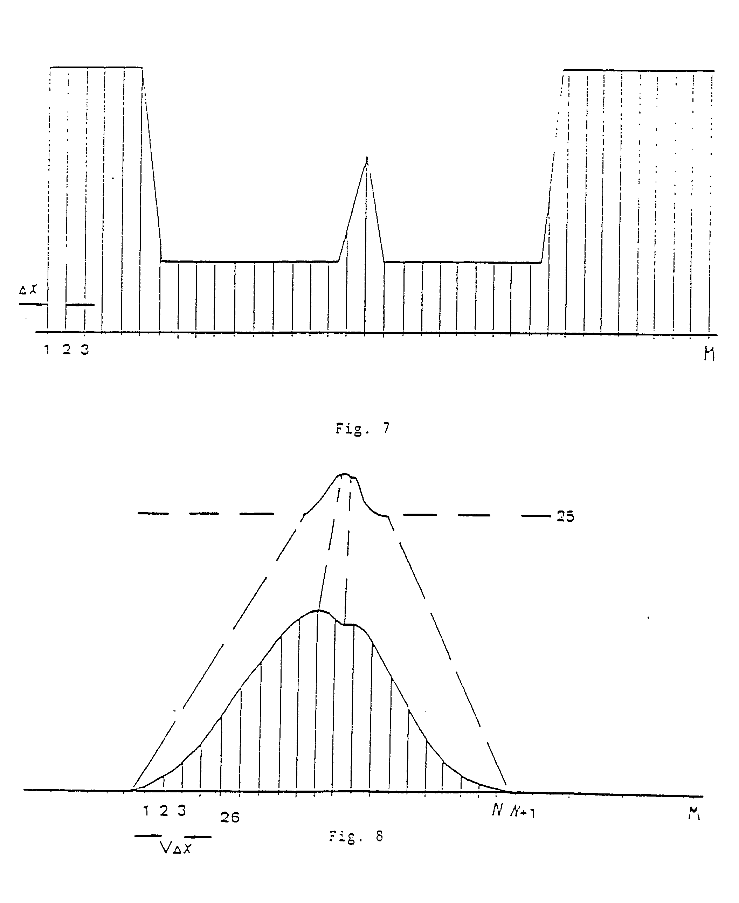

Die Ortsauflösung der Brechzahlprofilkurve ist durch die Strahltaille des Brennfleckdurchmessers auf zirka 1 Mikrometer begrenzt, wobei die Fokusgröße von der Wellenlänge des Lichts und der numerischen Apertur der fokussierenden Linse abhängt. Durch Verschiebung des endlich ausgedehnten Brennflecks über die Faserendfläche wird die Meßkurve des Brechzahlprofils erzeugt. Dies entspricht systemtheoretisch der Faltung des tatsächlichen Brechzahlprofils mit der Intensitäts verteilung des Lichtflecks im Ortsbereich. Zunächst muß die durch Verschiebung des Lichtflecks auf der Faserendfläche erhaltene Meßkurve an M Stützstellen im Abstand $\Delta x$ abgetastet werden (Fig. 7). Der Abstand $\Delta x$ ist dabei kleiner als ein Mikrometer zu wählen, da $\Delta x$ unmittelbar die Ortsauflösung beeinflußt. Erreicht wird dies durch langsame kontinuierliche Verschiebung des Lichtflecks, wie sie durch die erfindungsgemäßen Verstelleinheiten ermöglicht wird, und gleichzeitiger Abtastung der Meßwerte durch eine hohe, konstante Abtastfrequenz der Analog/Digitalwandlereinrichtung des Auswerterechners.

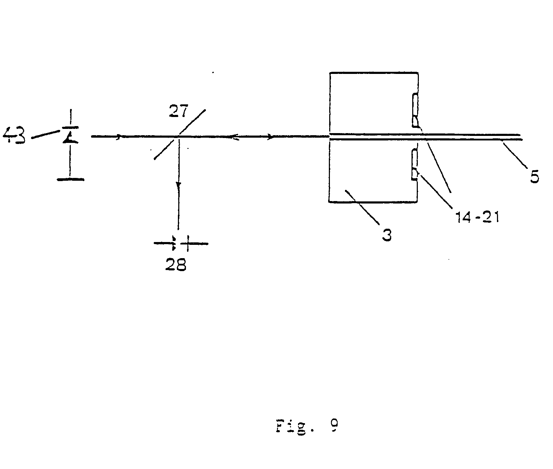

Die Intensitätsverteilung des Brennflecks wird durch Entfernung aus der Brennebene 25 um den Faktor V vergrößert abgebildet und in äquidistanten Abständen V $\Delta x$ abgetastet 26. Die Anzahl der Stützstellen N innerhalb des Intensitätsverlaufs ist proportional zur erreichbaren Verbesserung der Ortsauflösung. Die übrigen (M-N) Stützstellen erhalten den Wert Null (Fig. 8). Beide Meßkurven werden in einem Auswerterechner mit den Algorithmen der FFT* fouriertransformiert, dividiert und anschließend wieder rücktransformiert. Die rechnerisch gewonnene Kurve entspricht einem Brechzahlprofil mit verbesserter Ortsauflösung. Damit sind Feinstrukturen der Dotierungsvorgänge und Ausdiffusionsprozesse, die bei der Herstellung eine wesentliche Rolle spielen, an der Glasfaser meßtechnisch erfaßbar. Durch die Anwendung dieser Entfaltung ist der kritische und zeitaufwendige Justiervorgang des exakten Fokussierens des Brennflecks auf der Faserendfläche, wie es konventionell bei der RNF-Messung notwendig ist, nicht mehr nötig und es kann sogar mit schlecht fokussiertem Lichtstrahl eine wesentlich verbesserte Ortsauflösung erreicht werden. Die Beschränkung auf kurzwellige Lichtquellen ist damit ebenfalls aufgehoben.

In einer erfindungsgemäßen Weiterentwicklung kann die Laserdiode 43 im Pulsbetrieb arbeiten und so zusätzliche Information über Länge der Faserstrecke und Dämpfungsbelag der Faser durch Messung des Rückstreusignals (Fig. 9) mittels einer Strahlenteilerplatte 27 und eines zusätzlichen Detektors 28 ermöglicht werden.

In Fig. 10 ist eine weitere vorteilhafte Ausbildung der Meßzelle 53 dargestellt. Die üblicherweise ringförmig oder quaderförmig im Querschnitt ausgebildete Meßzelle 53 umfaßt im Beispiel auf der rechten Außenseite die Anschlußbuchse 30 für einen Glasfaserstecker 24. Auf der entsprechenden Innenseite ist ein Hohlspiegel 29 bzw. ein Hohlspiegelsegment mit entsprechender Bohrung angebracht. Der in der Immersionsflüssigkeit der Meßzelle 53 angeordnete Hohlspiegel 29 weist eine in der Achse der Meßzelle liegende

* FFT steht für Fast-Fourier-Transformation.

Öffnung auf, durch die die Glasfaser 5 axial zentriert durch die Meßzelle zur gegenüberliegenden Seite geführt ist.

Das Beleuchtungssystem der Meßanordnung weist schematisch eine Laserdiode 43 auf, der im Strahlengang ein Mikroskopobjektiv 32 nachgeschaltet ist. Dieses Mikroskopobjektiv fokussiert den Laserstrahl auf die im Hinblick auf ihr Brechzahlprofil zu vermessende Endfläche der Glasfaser 5. Die Endfläche der Glasfaser 5 liegt dabei flächenbündig gegen ein Deckglas, das die Öffnung für die Glasfaser in dieser Seitenfläche der Meßzelle abdeckt. Der Hohlspiegel 29 selbst ist etwas asymmetrisch angeordnet, so daß die an der Endfläche der Glasfaser 5 abgelenkten Lichtstrahlen auf eine einseitig von der Glasfaser 5 angeordneten Detektoranordnung 40 reflektiert werden. Durch diese Fokussierung mittels des Hohlspiegels 29 kann die Detektoranordnung 40 z. B. als eine rauscharme Photodiode ausgelegt werden. Die Öffnung des Hohlspiegels 29 kann so gehalten werden, daß die Leckwellen bei der Signalauswertung unberücksichtigt bleiben. In bekannter Weise ist die Meßzelle 53 mit einer Immersionsflüssigkeit gefüllt. Bei dem vorgenannten Aufbau der Meßzelle kann die erforderliche Öffnung im Hohlspiegel relativ leicht, z. B. mittels Bohren, vorgesehen werden. Zum anderen wird die Detektoranordnung kompakter und kostengünstiger.

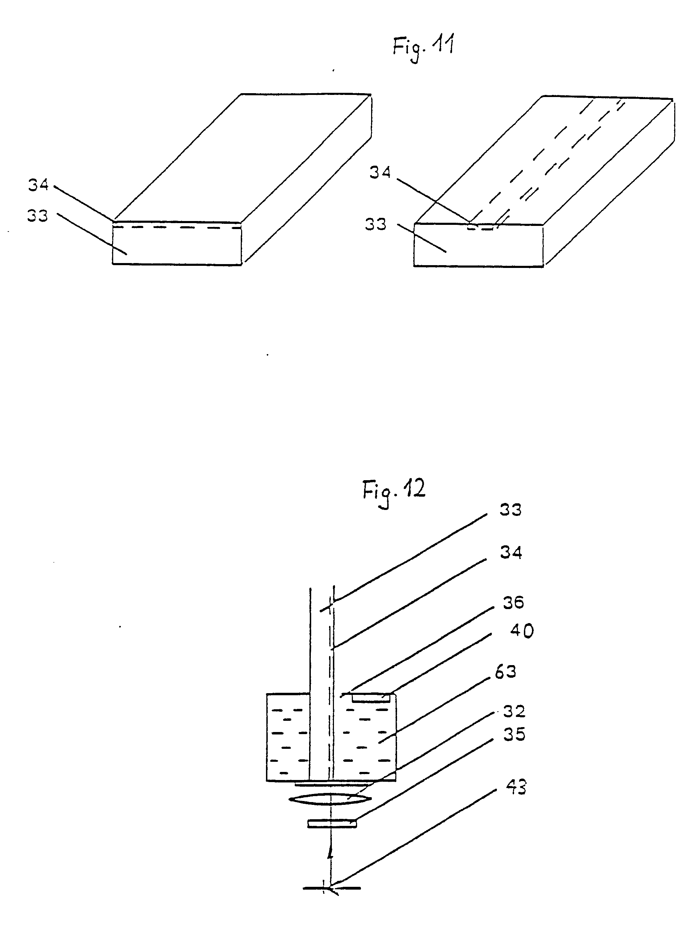

In Fig. 11 sind in perspektivischer Ansicht zwei Ausführungsbeispiele eines planaren, optischen Wellenleiters auf Substratmaterialbasis, z. B. auf LiNbO$_3$ oder Glas, gezeigt. Der im Querschnitt ein schmales Viereck bildende Wellenleiter, der bandartige Längserstreckung aufweist, ist im Beispiel auf der oberen Hauptfläche mit einer eindiffundierten Zone 34 ausgestattet, die den optischen Wellenleiter bildet. Die Diffusion erfolgt in das eigentliche Substratmaterial 33. Dieser planare Wellenleiter kann etwa eine Breite von 10 bis 20 mm und eine Höhe von etwa 3 mm aufweisen. Die eigentliche Wellenleiterschicht kann etwa 20 μm betragen oder geringer sein (Monomode-Wellenleiter).

Der optische Wellenleiter kann sich über die gesamte Breite einer Hauptfläche erstrecken oder wie im rechten Ausführungsbeispiel allein längs der Längsachse des Wellenleiters, so daß ein Leiter geringerer Oberflächenerstreckung als die Hauptoberfläche entsteht. Im rechten Ausführungsbeispiel des planaren Wellenleiters kann der Wellenleiter etwa eine Breite von 100 μm aufweisen.

Die entsprechende Meßanordnung (Fig. 12) entspricht in etwa der Meßanordnung nach Fig. 2. Das von einer Laserdiode 43 emittierte Laserlicht wird durch ein als Blende wirkendes Raumfilter 35 einem Mikroskopobjektiv 32 zugeleitet. Von dort wird es fokussiert und auf den planaren Wellenleiter 34 gerichtet. Der planare Wellenleiter 33, 34 ist so in die Meßzelle 63 eingeführt, daß allein die « Schicht » des planaren optischen Wellenleiters 34 axial justiert und ausgerichtet ist. Die Detektoranordnung 40 ist dabei einseitig, im Beispiel unterhalb des planaren Wellenleiters in der mit Immersionsflüssigkeit gefüllten Meßzelle 63 vorgesehen. Im Nahbereich des optischen Wellenleiters 34 ist an der Eintrittsstelle des Wellenleiters in die Meßzelle eine Blende 36 vorgesehen, die zur Auskopplung der Leckwellen dient. Die Meßauswertung im Hinblick auf das Brechzahlprofil erfolgt in der vorausgehend beschriebenen Weise.

**Patentansprüche**

1. Meßanordnung zur Erfassung des Brechzahlprofils von einwelligen und/oder vielwelligen optischen Wellenleitern, insbesondere von Glasfasern, nach der RNF-Methode, mit einer Laserlichtquelle, einem der Laserlichtquelle nachgeschalteten Linsensystem zur Fokussierung des Laserlichtstrahles auf eine Endfläche des optischen Wellenleiters, der in einer ein Immersionsfluid aufweisenden Meßzelle angeordnet ist, mit einer im Strahlengang nachgeschalteten Detektoranordnung zur Erfassung der Intensität des an der Endfläche des optischen Wellenleiters abgelenkten Laserlichtstrahlanteils in einem äußeren Strahlkegel, wobei der Detektoranordnung eine Auswerteeinrichtung zur Berechnung des Brechzahlprofils nachgeschaltet ist, dadurch gekennzeichnet, daß die Laserlichtquelle ein Halbleiterlaser (43) ist, daß eine Einrichtung zur kontinuierlichen Verschiebung des Laserlichtflecks auf der zu vermessenden Endfläche (51) des Wellenleiters vorgesehen ist, und daß die Detektoranordnung (54) innerhalb der Meßzelle (53) angeordnet ist.

2. Meßanordnung nach Anspruch 1, dadurch gekennzeichnet, daß der Halbleiterlaser (43) eine Laserdiode ist und daß das Linsensystem (2) Kugellinsen und/oder Mikrolinsen zur Strahlführung und Fokussierung aufweist.

3. Meßanordnung nach Anspruch 1 oder 2, dadurch gekennzeichnet, daß zur ruckfreien, kontinuierlichen Relativverschiebung des Linsensystems und/oder der Lichtquelle gegenüber der Meßzelle (53) für die räumliche Abtastung der Endfläche (51) des Wellenleiters (5 ; 34), Piezotranslatoren vorgesehen sind.

4. Meßanordnung nach Anspruch 1 oder 2, dadurch gekennzeichnet, daß zur ruckfreien, kontinuierlichen Relativverschiebung des Linsensystems und/oder der Lichtquelle gegenüber der Meßzelle Gleichstrommotoren vorgesehen sind und eine örtliche Lokalisierung mittels einer Strichcodescheibe erfolgt.

5. Meßanordnung nach einem der Ansprüche 1 bis 4, dadurch gekennzeichnet, daß zur räumlichen Abtastung der Endfläche (51) des Wellenleiters (5) eine elektrische Ablenkeinrichtung des Laserlichtstrahls, insbesondere mit zwei zueinander orthogonal stehenden Braggzellen (11), vorgesehen ist.

6. Meßanordnung nach einem der Ansprüche 1 bis 5, dadurch gekennzeichnet, daß die Detektoranordnung (54) zur Detektion der dem lokalen Brechungsindex proportionalen Lichtleistung ein um den Leckwellenbereich angeordnetes, insbesondere kreis- oder viereckförmig vorgesehenes, Diodenarray aufweist.

7. Meßanordnung nach einem der Ansprüche 1 bis 6, dadurch gekennzeichnet, daß zur exakten axialen Positionierung und Fixierung des Wellenleiters, insbesondere der Glasfaser, relativ zur Meßzelle (53) eine selbstzentrierende Steckereinrichtung, insbesondere ein Glasfaserstecker (24), vorgesehen ist.

8. Meßanordnung nach einem der Ansprüche 1 bis 7, dadurch gekennzeichnet, daß in der Meßzelle (53) ein Hohlspiegel (29) oder ein Hohlspiegelsegment mit einer Öffnung zur Durchführung des Wellenleiters (5) vorgesehen ist, und der Hohlspiegel die an der zu vermessenden Endfläche (51) des Wellenleiters abgelenkten Lichtstrahlen auf eine Detektoranordnung (40), die insbesondere als Einzelelement, z. B. als Photodiode, ausgelegt ist, konzentriert.

9. Meßanordnung nach einem der Ansprüche 1 bis 8, dadurch gekennzeichnet, daß bei einem planaren optischen Wellenleiter (34) die Detektoranordnung (40) in einem Abstand zum Wellenleiter zur Ausblendung von Leckwellen angeordnet ist.

10. Meßverfahren zur Erfassung des Brechzahlprofils von einwelligen und/oder mehrwelligen optischen Wellenleitern nach der RNF-Methode, dadurch gekennzeichnet, daß die dem lokalen Brechungsindex der zu vermessenden Endfläche des Wellenleiters proportionale detektierte Lichtleistung, die bei systemtheoretischer Betrachtung der Faltung des zu messenden Intensitätsverlaufs mit dem durch physikalische Gesetze begrenzten, endlich ausgedehnten abtastenden Brennflecks entspricht, der Entfaltung zur Steigerung der Ortsauflösung des Brechzahlprofils unterzogen wird.

11. Meßverfahren nach Anspruch 10, dadurch gekennzeichnet, daß die als Lichtquelle verwendete Laserdiode zur Bestimmung der Länge und des Dämpfungsbelages des Wellenleiters gepulst betrieben wird.

12. Meßverfahren nach Anspruch 10 oder 11, dadurch gekennzeichnet, daß eine Vorzentrierung der verwendeten Meßzelle mittels Differenzsignalbildung diametral gegenüberliegender Detektoren durchgeführt wird.

13. Meßverfahren nach einem der Ansprüche 10 bis 12, dadurch gekennzeichnet, daß das zur Brechzahlprofilmessung herangezogene Meßsignal aus der Summe aller Detektorsignale, insbesondere aus allen Photodiodenströmen, gebildet wird.

## Claims

1. A measuring arrangement for determining the refractive index profile of optical waveguides of the monomode and/or multimode type, especially of glass fibres, according to the RNF method, with a laser light source, a lens system series-connected with the laser light source for focussing the laser light beam on an end face of the optical waveguide, which is located in a measuring cell having an immersion liquid, with a detector arrangement series-connected in the optical path for determining the intensity of the laser light beam component in an outer light cone deflected on the end face of the optical waveguide to be measured and in which an evaluation means for calculating the index profile is connected in series with the detector arrangement, wherein the laser light source is a semiconductor laser (43), wherein a device is provided for the continuous displacement of the laser light spot to the end face (51) to be measured of the optical waveguide and wherein the detector arrangement (54) is arranged within the measuring cell (53).

2. A measuring arrangement according to claim 1, wherein the semiconductor laser (43) is a laser diode and wherein the lens system (2) has spherical lenses and/or microlenses for guiding and focussing the beam.

3. A measuring arrangement according to claim 1 or 2, wherein for the non-jerky, continuous relative displacement of the lens system and/or the light source with respect to the measuring cell (53) for the spatial scanning of the end face (51) of waveguide (5 ; 34) piezoelectric translators are provided.

4. A measuring arrangement according to claim 1 or 2, wherein for the non-jerky, continuous relative displacement of the lens system and/or the light source with respect to the measuring cell (53), direct current motors are provided and there is a local positioning by means of a bar coded disk.

5. A measuring arrangement according to anyone of the claims 1 to 4, wherein an electric deflecting device of the laser light beam is provided for the spatial scanning of the end face (51) of waveguide (5), especially comprising two Bragg cells (11) orthogonal to one another.

6. A measuring arrangement according to anyone of the claims 1 to 5, wherein the detector arrangement (54) for detecting the light power proportional to the local refractive index has a diode array, especially formed circular or tetragonal, which is arranged around the leaky wave range.

7. A measuring arrangement according to anyone of the claims 1 to 6, wherein for the exact axial positioning and fixing of the waveguide, especially the glass fibre, relative to the measuring cell (53), a self-centring plug means, especially a glass fibre plug, is provided.

8. A measuring arrangement according to anyone of the claims 1 to 7, wherein the measuring cell (53) contains a concave mirror (29) or a concave mirror segment with an opening for the passage of waveguide (5) and the concave mirror concentrates the light beams deflected on the end face (51) of the waveguide to be measured on a detector arrangement (40), which especially is a single element, e. g. a photodiode.

9. A measuring arrangement according to anyone of the claims 1 to 8, wherein in the case of a planar, optical waveguide (34), the detector arrangement (40) is located at a distance from the waveguide for blanking out leaky waves.

10. A measuring method for determining the refractive index profile of monomode and/or multimode optical waveguides according to the RNF method, wherein the detected light power proportional to the local refractive index of the end face of the waveguide to be measured and which in the case of system-theoretical consideration corresponds to the folding of the intensity profile to be measured with the finitely extended, scanning light spot limited by physical laws, undergoes unfolding increasing the position resolution of the index profile.

11. A measuring method according to claim 10, wherein for determining the length and the attenuation factor of the waveguide, a pulsed laser diode is used as the light source.

12. A measuring method according to claim 10 or 11, wherein there is a precentring of the measuring cell used by means of the subtraction of the measuring signals of diametrically facing detectors.

13. A measuring method according to anyone of the claims 10 to 12, wherein the measuring signal used for the index profile measurement is formed from the sum of all the detector signals, especially from all currents of the photodiodes.

**Revendications**

1. Dispositif de mesure pour détecter le profil de l'indice de réfraction de guides d'ondes optiques à une seule onde et/ou à ondes multiples, notamment de fibres de verre, selon la méthode RNF, comportant :
— une source lumineuse de laser,
— un système de lentilles monté à la suite de la source lumineuse du laser, pour focaliser le rayon lumineux du laser sur une surface terminale du guide d'ondes optique, qui est disposé dans une cellule de mesure contenant un fluide d'immersion,
— un dispositif de détection monté à la suite sur le trajet des rayons pour détecter l'intensité de la fraction du rayon lumineux du laser, dans un cône de rayons extérieur, qui est déviée sur la surface terminale du guide d'ondes optique, un dispositif d'évaluation étant monté à la suite du dispositif de détection pour la détermination par calcul du profil de l'indice de réfraction, dispositif de mesure caractérisé en ce que la source lumineuse du laser est un laser à semi-conducteur (43), en ce qu'il est prévu un dispositif pour déplacer de façon continue le spot lumineux du laser sur la surface terminale (51) du guide d'ondes destinée à servir au mesurage, et en ce que le dispositif de détection (54) est monté à l'intérieur de la cellule de mesure (53).

2. Dispositif de mesure selon la revendication 1, caractérisé en ce que le laser à semi-conducteur (43) est une diode laser, et en ce que le système de lentilles (2) comporte des lentilles sphériques et/ou des micro-lentilles pour le guidage et la focalisation du rayon.

3. Dispositif de mesure selon la revendication 1 ou 2, caractérisé en ce que, pour le déplacement relatif continu, sans à-coups, du système de lentilles et/ou de la source lumineuse par rapport à la cellule de mesure (53) pour l'exploration de l'étendue de la surface terminale (51) du guide d'ondes (5, 34), sont prévus des piézotranslateurs.

4. Dispositif de mesure selon les revendications 1 ou 2, caractérisé en ce que, pour le déplacement relatif continu, sans à-coups, du système de lentilles et/ou de la source lumineuse par rapport à la cellule de mesure, sont prévus des moteurs à courant continu, et une localisation de lieu s'effectue au moyen d'un disque de codage à traits.

5. Dispositif de mesure selon l'une des revendications 1 à 4, caractérisé en ce que, pour l'exploration de l'étendue de la surface terminale (51) du guide d'ondes (5), il est prévu un dispositif électrique de déviation du rayon lumineux du laser, notamment pourvu de deux cellules de Bragg (11) situées orthogonalement l'une par rapport à l'autre.

6. Dispositif de mesure selon l'une des revendications 1 à 5, caractérisé en ce que le dispositif de détection (54), prévu pour détecter la puissance lumineuse proportionnelle à l'indice de rétraction local, comporte un système de diodes disposé autour de la zone d'ondes de fuite, prévu notamment en forme de cercle ou de quadrilatère.

7. Dispositif de mesure selon l'une des revendications 1 à 6, caractérisé en ce que, pour le positionnement axial exact et la fixation du guide d'ondes, notamment de la fibre de verre, par rapport à la cellule de mesure (53), il est prévu un dispositif d'enfichage à centrage automatique, notamment un connecteur (24) de fibre de verre.

8. Dispositif de mesure selon l'une des revendications 1 à 7, caractérisé en ce qu'il est prévu dans la cellule de mesure (53) un miroir concave (29) ou un segment de miroir concave, pourvu d'un orifice pour faire passer le guide d'ondes (5), et le miroir concave concentre les rayons lumineux, déviés sur la surface terminale (51) du guide d'ondes destinée à servir au mesurage, sur un dispositif de détection (40), qui est réalisé notamment comme élément distinct, par exemple sous la forme de photodiode.

9. Dispositif de mesure selon l'une des revendications 1 à 8, caractérisé en ce que, dans le cas d'un guide d'ondes optique (34) planaire, le dispositif de détection (40) est monté à une certaine distance du guide d'ondes en vue de la séparation par diaphragme d'ondes de fuite.

10. Procédé de mesure pour détecter le profil de l'indice de réfraction de guides d'ondes optiques à une seule onde et/ou à ondes multiples, selon la méthode RNF, procédé caractérisé en ce que la puissance du flux lumineux, qui est proportionnelle à l'indice de réfraction local de la surface terminale du guide d'ondes destinée à servir au mesurage, et, en prenant en considération la théorie des systèmes, correspond à l'état de resserrement de l'allure de l'intensité à mesurer, avec le spot lumineux explorateur qui a fini d'être étendu en étant limité par des lois physiques, est soumise à un développement d'amplification pour augmenter la capacité de détermination locale du profil de l'indice de réfraction.

11. Procédé de mesure selon la revendication 10, caractérisé en ce que l'on fait fonctionner en régime pulsé la diode laser utilisée comme source lumineuse, en vue de déterminer la longueur et la couche d'amortissement du guide d'ondes.

12. Procédé de mesure selon la revendication 10 ou 11, caractérisé en ce que l'on effectue en pré-centrage de la cellule de mesure utilisée, au moyen de la formation de la différence de signaux de détecteurs diamétralement opposés.

13. Procédé de mesure selon l'une des revendications 10 à 12, caractérisé en ce que le signal de mesure exploité pour mesurer le profil de l'indice de réfraction est formé par la somme de tous les signaux du détecteur, en particulier de tous les courants de la photodiode.

Fig. 1

Fig. 2

Fig. 3

Fig. 4

2

Fig. 5

Fig. 6

3

$\Delta X$

1 2 3

M

Fig. 7

25

1 2 3  26  N N+1  M

$\overline{V_{\Delta x}}$

Fig. 8

4

Fig. 9

Fig. 10

5

30

29

53

32

43

40

Fig. 11

34
33

34
33

Fig. 12

33
34
36
40
63
32
35
43

7